(19) Europäisches Patentamt
European Patent Office
Office européen des brevets

(11) **EP 3 679 433 B1**

(12) **EUROPÄISCHE PATENTSCHRIFT**

(45) Veröffentlichungstag und Bekanntmachung des Hinweises auf die Patenterteilung:
**06.04.2022   Patentblatt 2022/14**

(21) Anmeldenummer: **18765047.8**

(22) Anmeldetag: **24.08.2018**

(51) Internationale Patentklassifikation (IPC):
**G05B 19/4065** (2006.01)

(52) Gemeinsame Patentklassifikation (CPC):
**G05B 19/4065**

(86) Internationale Anmeldenummer:
**PCT/EP2018/072847**

(87) Internationale Veröffentlichungsnummer:
**WO 2019/048254 (14.03.2019 Gazette 2019/11)**

(54) **VERFAHREN ZUM ÜBERWACHEN EINER WERKZEUGMASCHINE, INSBESONDERE AUF WERKZEUGBRUCH**

METHOD FOR MONITORING A MACHINE TOOL, IN PARTICULAR FOR TOOL FRACTURE

PROCÉDÉ DE SURVEILLANCE D'UNE MACHINE-OUTIL, NOTAMMENT POUR DÉTECTER UN OUTIL CASSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2017   DE 102017120518**

(43) Veröffentlichungstag der Anmeldung:
**15.07.2020   Patentblatt 2020/29**

(73) Patentinhaber: KOMET Deutschland GmbH
**74354 Besigheim (DE)**

(72) Erfinder:
• **BRINKHAUS, Jan-Wilm**
**30916 Isernhagen (DE)**
• **IMIELA, Joachim**
**31559 Haste (DE)**
• **WITTKOWSKI, Thomas**
**71397 Leutenbach (DE)**
• **LÜGERING, Uwe**
**30559 Hannover-Anderten (DE)**

(74) Vertreter: **Gramm, Lins & Partner Patent- und Rechtsanwälte PartGmbB Theodor-Heuss-Straße 1 38122 Braunschweig (DE)**

(56) Entgegenhaltungen:
EP-A1- 1 407 853           EP-A1- 1 679 566
WO-A1-2007/090536     DE-A1- 4 117 637

EP 3 679 433 B1

**Beschreibung**

Die Erfindung betrifft ein Verfahren zum Überwachen einer Werkzeugmaschine, insbesondere auf Werkzeugbruch, die (i) eine Spindel, (ii) zumindest eine erste Maschinenachse und (iii) eine Maschinensteuerung, die ausgebildet ist zum Ausgeben von Maschinenparametern, aufweist. Gemäß einem zweiten Aspekt betrifft die Erfindung eine Überwachungsvorrichtung mit einer Auswerteeinheit und einer Verbindungsvorrichtung zum Verbinden der Auswerteeinheit mit einer Maschinensteuerung einer Werkzeugmaschine. Gemäß einem weiteren Aspekt betrifft die Erfindung eine Werkzeugmaschine mit einer Spindel, zumindest einer Maschinenachse und einer Maschinensteuerung, die ausgebildet ist zum Ausgeben von Maschinenparametern und gegebenenfalls zum Ansteuern der Spindel und der Maschinenachse. Werkzeugmaschinen werden insbesondere zur spanenden Bearbeitung eingesetzt. Insbesondere ist die Werkzeugmaschine daher eine spanende Werkzeugmaschine. Derartige Werkzeugmaschinen führen ein Werkzeug, mit dem das Werkstück bearbeitet wird, insbesondere spanend. Beispielsweise handelt es sich bei der Werkzeugmaschine um eine Fräsmaschine. Insbesondere dann, wenn große Werkstücke bearbeitet werden müssen, beispielsweise Gesenke, oder aber wenn die Werkzeugmaschine in der Massenfertigung eingesetzt wird, ist es vorteilhaft, wenn ein Werkzeugbruch frühzeitig erkannt werden kann. Das verhindert die Verschwendung von Maschinenhauptzeit.

Das Ziel einer jeden Überwachung ist ein Verfahren, das einen Werkzeugbruch mit sehr hoher Wahrscheinlichkeit erkennt und zudem selten Fehlalarme auslöst. Insbesondere die Rate an Fehlalarmen kann bei bekannten Verfahren vergleichsweise hoch sein, was unerwünscht ist. Dies führt nämlich dazu, dass, insbesondere dann, wenn eine große Vielzahl an Werkzeugmaschinen überwacht werden muss, Personal bereitgestellt werden muss, das lediglich damit beschäftigt ist, Fehlalarme zu erkennen und abzuschalten. Das bedingt sowohl eine vergleichsweise niedrige Produktivität als auch Frustration beim Personal.

Die EP 1 407 853 A1 beschreibt eine Vorrichtung und ein Verfahren zum Erfassen und zur Vorhersage von Werkzeugbrüchen von Werkzeugmaschinen. Betrachtet wird die Schneidzeit, während der das Werkzeug im Eingriff ist, das Maximum des Absolutwerts des Abfalls der Schnittkraft am Ende des Bearbeitungsprozesses und eine Fläche unter der Kurve, die die Schnittkraft über die Zeit aufträgt. Zum Berechnen dieser Werte wird zunächst das Rauschen aus den Roh-Daten entfernt und danach die genannten Werte für jeden Bearbeitungsvorgang aufgenommen. Für die genannten Werte werden aus den so erhaltenen Werten Schwellenwerte errechnet, anhand derer für den jeweils aktuellen Bearbeitungsvorgang beurteilt wird, ob das Werkzeug gebrochen ist oder nicht.

Aus der EP 1 679 566 A1 ist bekannt, eine Signalspanne zwischen dem Maximalwert und dem Minimalwert für einen Lastparameter der Spindel zu betrachten. Alternativ oder zusätzlich wird die Fläche unter der Kurve während einer Bearbeitung betrachtet oder ein Durchschnitts-Lastparameter oder eine Differenz zwischen einem Durchschnitt der Absolutwerte des Lastparameters für einen bestimmten Bearbeitungszyklus einerseits und dem Durchschnitt dieses Lastparameters über vorhergehende Bearbeitungszyklen andererseits. Alternativ oder zusätzlich wird ein Quotient verwendet, der erhalten wird durch das Teilen der Signalspanne zwischen dem Maximalwert und dem Minimalwert für einen bestimmten Bearbeitungszyklus als Zähler durch den Durchschnitt der Absolutwerte für den entsprechenden Bearbeitungszyklus. Wiederum alternativ oder zusätzlich wird der Absolutwert der maximalen Steigung einer Flanke beim Werkzeugeingriff oder der Maximalwert der Steigung an der abfallenden Flanke betrachtet. Aus den genannten Werten werden Schwellenwerte berechnet und der jeweils aktuelle Messwert mit diesen Schwellenwerten verglichen. Wird einer der Schwellenwerte überschritten, wird ein Alarm ausgegeben. Nachteilig an einem derartigen System ist, dass eine vergleichsweise große Zahl an gleichartigen Bearbeitungen durchgeführt werden muss, damit die entsprechenden Parameter erhalten werden.

Aus der WO 2007/090536 A1 ist ein Verfahren zur Werkzeugbruchkontrolle während der Bearbeitung in den Werkzeugmaschinen bekannt, bei dem der längste zusammenhängende Zeitabschnitt im Bereich der Leerlaufleistung innerhalb des erfassten Leistungsverlaufs verwendet wird, um zu ermitteln, ob das Werkzeug gebrochen ist. Nachteilig an einem derartigen Verfahren ist, dass mehrere Gründe dafür existieren können, dass die Spindel im Leerlauf läuft. Beispielsweise kann das Werkstück so eingespannt sein, dass eine vom Programm vorgesehene Planfräsoperation überflüssig wird. In diesem Fall steht der Fräser außer Eingriff, ohne dass ein Werkzeugbruch vorliegt. Es sind zudem weitere Szenarien denkbar, bei denen ein Fehlalarm ausgegeben wird, was nachteilig ist.

Aus der DE 41 17 637 A1 ist eine Steuervorrichtung für eine spanende Werkzeugmaschine bekannt, bei der die Leistung der Spindel erfasst wird. Zunächst wird dieser Wert von Rauscheinflüssen gereinigt und dann zur Ermittlung des Verschleißes und von Abplatzungen verwendet. Nachteilig an diesem Verfahren ist, dass die Spindelleistung nicht nur vom Verschleiß und von Abplatzungen abhängig ist, sondern beispielsweise auch von der Zerspanungsdicke, die Schwanken kann, ohne dass ein Fehler vorliegt.

Der Erfindung liegt die Aufgabe zugrunde, ein verbessertes Überwachungsverfahren vorzuschlagen.

Die Erfindung löst das Problem durch ein Überwachungsverfahren mit den Merkmalen von Anspruch 1.

Gemäß einem zweiten Aspekt löst die Erfindung das Problem durch eine Überwachungsvorrichtung mit den Merkmalen von Anspruch 8 und eine Werkzeugmaschine mit den Merkmalen von Anspruch 9.

Vorteilhaft an dem Verfahren ist, dass es sowohl einen Werkzeugbruch sicher erkennt als auch wenige Fehlalarme erzeugt. Der Erfindung liegt unter anderem die Erkenntnis zugrunde, dass es bei einem Werkzeugbruch zu zwei unterschiedlichen Effekten kommt. Zunächst sinkt die Leistungsaufnahme der Spindel, da das Werkzeug nicht mehr angetrieben werden kann. Da die Leistung der Spindel jedoch auch ohne das Vorhandensein eines Werkzeugs selten null ist, hängt diese von einer Vielzahl anderer Faktoren ab. Es ist daher in der Regel nicht möglich, einen stets gültigen Grenzwert anzugeben, bei dessen Unterschreiten davon ausgegangen werden kann, dass das Werkzeug gebrochen ist. Zum Zweiten kommt es bei einem Werkzeugbruch in der Regel zu einer Verringerung der Schwankung der Spindelparameter-Messwerte. Auch wenn eine große Anzahl an Messwerten aufgenommen wird und damit zu befürchten wäre, dass allein durch stochastische Fluktuationen ein vorgegebener Schwellenwert von Zeit zu Zeit zufällig überschritten wird, führt die geringe Schwankung des Spindelparameters dazu, dass das nicht der Fall ist.

Vorteilhaft ist zudem, dass das Überwachungsverfahren für eine Vielzahl an Bearbeitungsarten einsetzbar ist, ohne dass im Vorhinein bekannt sein muss, auf welche Art das Werkstück bearbeitet wird. Das heißt, es ist besonders günstig, wenn das Bearbeitungsprogramm zunächst ein Bringen der Spindel auf eine Soll-Drehzahl umfasst, wobei das Werkzeug erst dann mit dem Werkstück in Eingriff gebracht wird, wenn die Spindel eine vorgegebene Drehzahl erreicht hat. Das Überwachungsverfahren ist aber auch einsetzbar, wenn das Bearbeitungsprogramm andere Schritte aufweist. In der Regel weisen Bearbeitungsprogramme jedoch die beiden oben genannten Schritte auf.

Das Bringen der Spindel auf Soll-Drehzahl führt zu großen Spindelparameter-Messwerten, da die Spindel in aller Regel mit maximaler Leistung der Spindel hochgefahren wird. Dadurch steigen die Spindelparameter-Messwerte zunächst stark an und fallen danach wieder ab und durchlaufen in der Regel ein Minimum.

Vorzugsweise werden die Spindelparameter-Minimalwerte nach Erreichen des Maximums und vor Erreichen des Minimums betrachtet, insbesondere zu einem Zeitpunkt, zu dem der Spindelparameter-Messwert kleiner ist als 75 % des maximalen Werts und größer als 25 % des Maximalwerts. Das führt dazu, dass die Spindelparameter-Minimalwerte zunächst kontinuierlich sinken, bis die Spindelparameter-Messwerte ihr Minimum durchlaufen.

Danach steigen die Spindelparameter-Messwerte wieder an, da der Eingriff des Werkzeugs in das Werkstück erfolgt. Bricht das Werkzeug jedoch, fallen die Spindelparameter-Messwerte auf einen Wert nahe des Minimums und unterschreiten daher aufgrund der geringeren Schwankung der Spindelparameter-Messwerte über die vorgegebene Intervallzeit den Überwachungsgrenzwert, sodass ein Alarm ausgegeben wird.

Im Rahmen der vorliegenden Beschreibung wird unter der Spindel insbesondere diejenige Vorrichtung verstanden, die ein Werkzeug, insbesondere ein spanendes Werkzeug wie beispielsweise einen Fräser oder einen Bohrer, dreht.

Unter der Maschinenachse wird eine Bauteilgruppe verstanden, mittels der ein Teil der Maschinenachse, insbesondere linear, geführt ist. Die Maschinenachse umfasst zudem einen Antrieb zum automatischen Bewegen der beiden Teile relativ zueinander. Vorzugsweise besitzt die Werkzeugmaschine eine zweite und zumindest eine dritte Maschinenachse. Insbesondere handelt es sich um eine Vier- oder Fünf-Achs-Werkzeugmaschine. Selbstverständlich ist es auch möglich, dass die Werkzeugmaschinen zusätzliche Achsen aufweist.

Unter der Maschinensteuerung wird insbesondere eine Vorrichtung zur digitalen Datenverarbeitung verstanden, die mit der zumindest einen Maschinenachse und der Spindel zum Ansteuern verbunden ist.

Unter einem Bearbeitungsprogramm zum Bearbeiten des Werkstücks wird insbesondere ein NC-Programm verstanden, das in der Maschinensteuerung abgelegt sein kann. Anhand dieses NC-Programms werden die Spindel und die Maschinenachse so angesteuert, dass das Werkstück bearbeitet wird.

Unter dem zeitabhängigen Erfassen des Spindelparameters wird verstanden, dass der Spindelparameter zu aufeinander folgenden Zeitpunkten erfasst wird. Der Abstand zweier Zeitpunkte ist vorzugsweise kleiner als eine Zehntelsekunde.

Unter dem Spindelparameter wird insbesondere ein Parameter verstanden, der mit der Spindelleistung korreliert, insbesondere anhand dessen auf eindeutige Weise auf die Spindelleistung geschlossen werden kann. Es kann sich dabei nur um die Spindelleistung selbst, ein Drehmoment der Spindel, einen Ankerstrom des Elektromotors der Spindel oder einen Vektor handeln, der beispielsweise die Drehzahl der Spindel und eine Phasenverschiebung zwischen Ankerstrom und Ankerspannung enthält. Vorzugsweise handelt es sich bei dem Signalrauschparameter s um einen Wert, der zur Standardabweichung oder zur Varianz der Verteilung der Rauschwerte korreliert.

Unter dem Erfassen des Signalrauschparameters s wird verstanden, dass dieser Wert s in einen Speicher abgelegt wird. Es ist möglich, nicht aber notwendig, dass der Signalrauschparameter s zeitabhängig erfasst wird. Insbesondere ist es möglich, dass der Signalrauschparameter s lediglich einmal bestimmt wird. Es ist auch möglich, dass der Signalrauschparameter s vor dem Start des Überwachungsverfahrens anhand vorher erfasster Daten ermittelt und in eine Eingabemaske eingetragen wird, von wo aus er bei der Abarbeitung des Überwachungsverfahrens verwendet wird.

Unter dem Merkmal, dass die Signalrauschparameter s die Stärken der stochastischen Schwankungen der Spindelparameter-Messwerte beschreibt, wird insbesondere verstanden, dass der Signalrauschparameter s umso größer ist, je größer die Standardabweichung der Verteilung ist, die die Abweichung der Spindelparameter-Messwerte von einem gleitenden Mittelwert beschreibt, wobei dieser gleitende Mittelwert beispielsweise durch Tiefpass-Filterung mit einem Ein-Hertz-Tiefpass bestimmt wird. Das zeitliche Intervall für die Berechnung des Spektrums kann beispielsweise 1 Sekunde sein. Beispielsweise wird der Signalrauschparameter bestimmt, bevor das Werkzeug in das Werkstück eingreift.

Unter dem Merkmal, dass nach Erreichen der vorgegebenen Programmzeile des Bearbeitungsprogramms kontinuierlich der Spindelparameter-Minimalwert berechnet wird, wird insbesondere verstanden, dass es möglich, nicht aber notwendig ist, dass der Spindelparameter-Minimalwert auch schon vorher berechnet, nicht aber verwendet wird. Beispielsweise gibt die Maschinensteuerung ein Signal ab, wenn die entsprechende Programmzeile erreicht ist. Alternativ wird die jeweilige Programmzeile des Bearbeitungsprogramms kontinuierlich erfasst und das Berechnen und/oder Verwerten des Spindelparameter-Minimalwertes gestartet, wenn die angegebene Mitbedingung erfüllt ist. Wiederum alternativ ist es möglich, dass aus dem Verlauf der Spindelparameter-Messwerte der Zeitpunkt ermittelt wird, wenn die vorliegende Programmzeile erreicht ist. Der Spindelparameter durchläuft in aller Regel ein zeitliches lokales Minimum, wenn die Soll-Drehzahl der Spindel erreicht ist. Wird daher das Durchlaufen des lokalen Minimums erfasst, kann darauf geschlossen werden, dass die Soll-Spindeldrehzahl erreicht ist. Bezieht sich die vorgegebene Programmzeile auf das Erreichen der Soll-Spindeldrehzahl, so kann aus der Tatsache, dass das Minimum durchlaufen wurde, darauf geschlossen werden, dass und/oder wann die vorgegebene Programmzeile erreicht ist.

Unter dem Merkmal, dass der Wirkungsgrenzwert kontinuierlich berechnet wird, wird insbesondere verstanden, dass der Überwachungsgrenzwert zumindest einmal, vorzugsweise zumindest zehnmal, pro Sekunde berechnet wird.

Unter dem Merkmal, dass der Überwachungsgrenzwert aus dem Spindelparameter-Minimalwert und dem Signalrauschparameter und/oder dem Signalspannenparameter berechnet wird, wird insbesondere verstanden, dass eine Formel verwendet wird, in der zumindest einer der beiden Parameter enthalten ist. Es ist möglich, dass weitere Parameter enthalten sind, dass nur beide Parameter enthalten sind und dass nur genau einer der Parameter enthalten ist.

Unter dem Ausgeben einer Warnmeldung wird insbesondere verstanden, dass ein vom Menschen wahrnehmbares oder nicht wahrnehmbares Signal abgesetzt wird, bei dem es sich beispielsweise um ein optisches, akustisches oder elektrisches Signal handeln kann. Insbesondere wird das Warnsignal an die Maschinensteuerung abgegeben, sodass diese das Bearbeitungsprogramm anhält. So wird verhindert, dass der verbliebene Rest des mittlerweile zerstörten Werkzeugs in das Werkstück gefahren wird.

In einer bevorzugten Ausführungsform entspricht der Überwachungsgrenzwert zumindest der Summe aus dem Spindelparameter-Minimalwert und dem Minimum aus dem k-fachen des Signalrauschparameters, wobei $1 \leq k \leq 13$ gilt, und dem L-fachen eines Signalspannenparameters Q, wobei $0{,}05 \leq L \leq 0{,}8$ gilt und wobei der Signalspannenparameter Q eine Breite des Intervalls angibt, in dem die Spindelparameter-Messwerte bei der Bearbeitung des Werkstücks liegen. Es sei darauf hingewiesen, dass der Signalrauschparameter und der Signalspannenparameter die gleiche Einheit haben wie der Signalparameter-Minimalwert. Wenn der Signalrauschparameter s als Varianz gewählt wird, so entspricht diese Varianz einer Breite eines Intervalls des Spindelparameters.

Vorzugsweise ist der Überwachungsgrenzwert zumindest so groß wie die Summe aus dem Spindelparameter-Minimalwert, dem k-fachen des Signalrauschparameters s und dem L-fachen des Signalspannenparameters Q, wobei die oben genannten Parameterintervalle gelten.

Vorzugsweise umfasst das Verfahren die Schritte eines zeitabhängigen Erfassens des Spindelparameters für eine vorgegebene Anlernzeit zu Beginn des Überwachungsverfahrens und vor dem Erreichen der vorgegebenen Programmzeile gemäß Schritt (c) und Speichern des Spindelparameter-Minimalwertes, der in einem Intervall um den Mittelwert des Spindelparameters liegt, wobei der Mittelwert berechnet wird aus dem absoluten Maximum des Spindelparameters und dem absoluten Minimum des Spindelparameters, wobei das Intervall eine Intervallbreite hat, die der Hälfte der Differenz zwischen dem Maximum und dem Minimum des Spindelparameters in der Anlernzeit entspricht. Auf diese Weise wird erreicht, dass als Startwert für den Spindelparameter-Minimalwert kein zu kleiner Wert gewählt wird.

Die Intervallzeit liegt vorzugsweise zwischen dem 0,3-fachen und dem 0,8-fachen einer Bearbeitungszeit, in der das Werkstück mit ein und demselben Werkzeug bearbeitet wird. Alternativ oder zusätzlich beträgt die Intervallzeit zumindest 0,5 Sekunden und höchstens 10 Minuten. Es ist möglich, dass dieser Startwert beim Abarbeiten eines Bearbeitungsprogramms erfasst wird und gespeichert wird, wobei dieser Startwert dann für weitere Bearbeitungen mit dem gleichen Bearbeitungsprogramm verwendet wird.

Vorzugsweise beträgt das Produkt aus Intervallzeit $\Delta t$ und einer Abtastfrequenz $f_s$, mit der der Spindelparameter erfasst wird, zumindest 300, vorzugsweise zumindest 1 000. Vorzugsweise ist dieses Produkt kleiner als 100 000, insbesondere kleiner als 50 000.

Auf diese Weise wird sichergestellt, dass ein zufälliges Überschreiten des Überwachungsgrenzwertes hinreichend wahrscheinlich ist.

Vorzugsweise beträgt der Signalrauschparameter zwischen 1 Promille und 50 Promille des Spindelparameter-Maximalwerts oder des zu erwartenden Spindelparameter-Maximalwerts. Dieser wird vorzugsweise automatisch errechnet, indem der Spindelparameter auch außerhalb von überwachten Bearbeitungen erfasst wird. Dabei wird das Maximum gebildet und als Spindelparameter-Maximalwert gespeichert. Beginnt das erste Mal ein überwachter Prozess, wird der Spindelparameter-Maximalwert mit einem festen Faktor multipliziert, der in das oben genannte Intervall fällt, vorzugsweise 10 Promille.

Alternativ liegt der Signalrauschparameter s zwischen der Standardabweichung und dem Doppelten der Standardabweichung $\sigma$ einer Verteilung der Abweichung der Spindelparameter-Messwerte von einem gleitenden Mittelwert. Der gleitende Mittelwert wird vorzugsweise berechnet durch Filtern der Spindelparameter-Messwerte mit einem Ein-Hertz-Tiefpass. Alternativ oder zusätzlich beträgt der Signalrauschparameter s höchstens das 5-fache, insbesondere höchstens das 4-fache, dieser Standardabweichung $\sigma$.

Im Folgenden wird die Erfindung anhand der beigefügten Zeichnungen näher erläutert. Dabei zeigt

Figur 1     eine schematische Ansicht einer erfindungsgemäßen Werkzeugmaschine und

Figur 2     eine Kurve mit Spindelparameter-Messwerten, anhand derer das erfindungsgemäße Überwachungsverfahren erläutert wird.

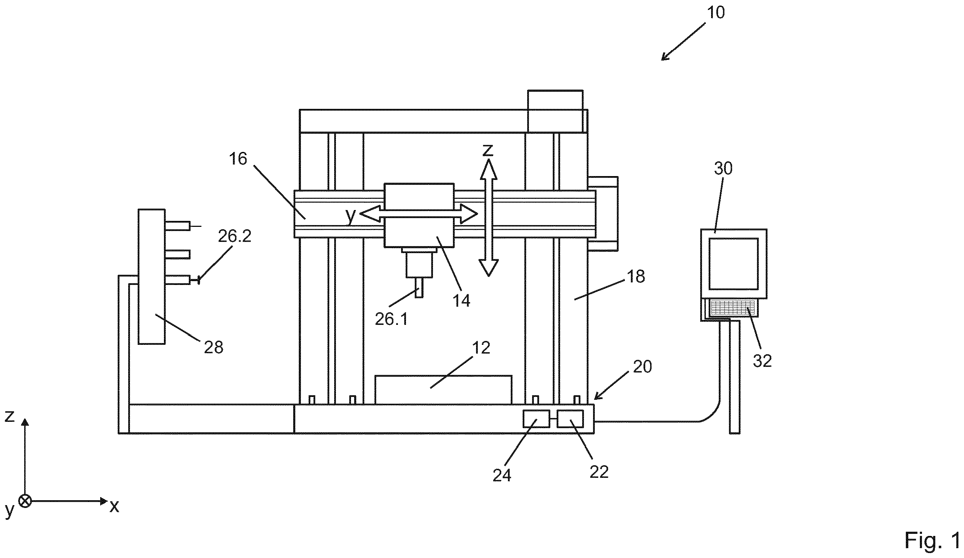

Figur 1 zeigt schematisch eine Werkzeugmaschine 10 zum Bearbeiten eines Werkstücks 12, die eine Spindel 14, die an einer ersten Maschinenachse 16 befestigt ist, aufweist. Die Werkzeugmaschine 10 besitzt zudem eine zweite Maschinenachse 18 und eine dritte Maschinenachse 20, mittels der die zweite Maschinenachse 18 längsbeweglich ist. Mittels der ersten Maschinenachse 16 kann die Spindel 14 in eine x-Richtung bewegt werden, mittels der zweiten Maschinenachse 18 in eine z-Richtung und mittels der dritten Maschinenachse 20 in y-Richtung.

Die Werkzeugmaschine 10 besitzt eine schematisch eingezeichnete Maschinensteuerung 22, mittels der die Maschinenachsen 16, 18, 20 sowie die Spindel 14 angesteuert werden können.

Im vorliegenden Fall ist die Maschinensteuerung 22 mit einer Auswerteeinheit 24 verbunden, die von der Werkzeugmaschine 10 getrennt werden kann und die zum Abgreifen von Maschinendaten mit der Maschinensteuerung 22 verbunden ist.

In der Maschinensteuerung 22 ist ein Bearbeitungsprogramm gespeichert. Dieses Bearbeitungsprogramm kodiert die Bewegungen der Spindel 14 auf einer dreidimensionalen Trajektorie $\vec{r}(t)$. Das Bearbeitungsprogramm kann zudem einen Wechsel eines Werkzeugs 26.1, das in der Spindel 14 aufgenommen ist, gegen ein anderes Werkzeug 26.2, das beispielsweise in einem Werkzeugwechsler 28 aufgenommen ist, kodieren.

Die Maschinensteuerung 22 ist mit einem Bildschirm 30 und einer Eingabevorrichtung 32, insbesondere einer Tastatur, verbunden, mittels denen das Bearbeitungsprogramm angezeigt sowie erstellt, gestartet und modifiziert werden kann.

Nach der Bearbeitung des Werkstücks 12 erfasst die Maschinensteuerung 22 Bearbeitungsparameter, beispielsweise ein Spindel-Drehmoment Ms. Dieses stellt einen Spindelparameter P dar, der die Leistung der Spindel 14 zeitabhängig beschreibt. Die Auswerteeinheit 24 greift die Spindelparameter-Messwerte $P(\tau)$ kontinuierlich von der Maschinensteuerung 22 ab.

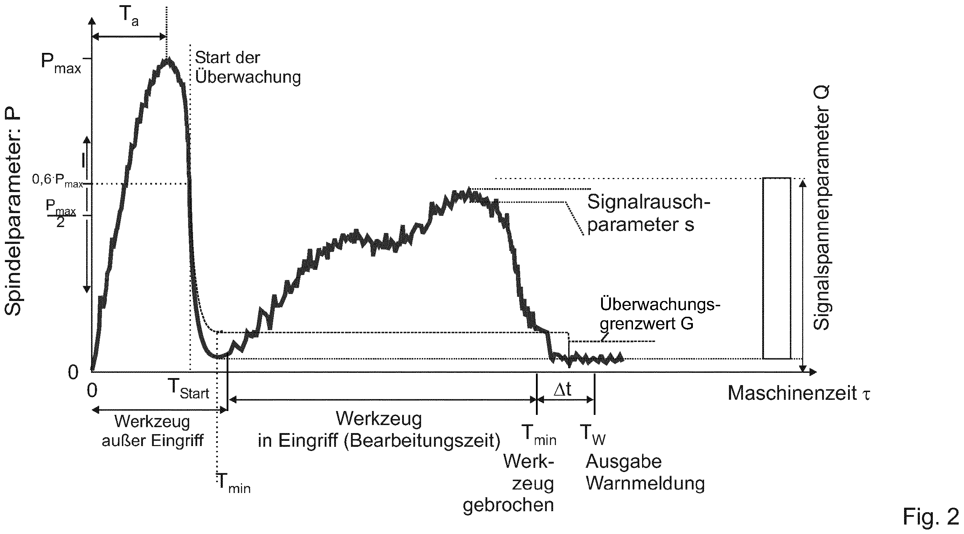

Figur 2 zeigt den zeitlichen Verlauf von Spindelparameter-Messwerten $P(\tau)$ von der Maschinenzeit $\tau$. Es sei darauf hingewiesen, dass sich die Auswertung nicht ändert, wenn statt der Maschinenzeit $\tau$ die reale Zeit t verwendet wird.

Zu Beginn des Bearbeitungsprogramms wird die Spindel 14 (vergleiche Figur 1) auf eine Soll-Drehfrequenz nsoii gebracht. der Spindelparameter P steigt zunächst stark an und fällt danach auf ein Minimum ab, wenn die Soll-Drehfrequenz $n_{Soll}$ erreicht ist. Nachdem ein Spindelparameter-Maximalwert $Ps_{,max}$ durchlaufen ist und der Spindelparameter P zumindest um das 0,4-fache des Maximalwertes $Ps_{,max}$ gefallen ist, beginnt das Überwachungsverfahren. Die Zeit vom Start des Bearbeitungsprogramms bei $\tau = 0$ bis zum Überschreiten des Maximalwertes $Ps_{,max}$ ist die Anlernzeit $T_a$.

Das Überwachungsprogramm startet, wenn eine vorgegebene Programmzeile im Bearbeitungsprogramm erreicht wird. In dieser Programmzeile ist vorzugsweise ein Startbefehl enthalten, Dieser Startbefehl liegt vorzugsweise nach dem Hochfahren der Spindel und vor dem des Werkstückeingriffs. Alternativ berechnet die Auswerteeinheit 24 den Mittelwert zwischen dem Maximum Pmax und dem Minimalwert Pmin, der in der Regel null ist, und startet das Überwachungsprogramm, wenn der entsprechende Parameter P in einem Intervall I um den Mittelwert $P_{max}/2$ liegt. Das Intervall I hat eine Intervallbreite B, die beispielsweise der Hälfte der Differenz zwischen dem Maximum Pmax und dem Minimum Pmin, für das hier Pmin = 0 gilt, entspricht. Allgemein liegt die Intervallbreite zwischen einem Hundertstel und zwei Dritteln.

Während des Abarbeitens des Bearbeitungsprogramms wird der Spindelparameter P kontinuierlich erfasst. Zudem wird in der Anlernzeit $T_a$ ein Signalrauschparameter s bestimmt. Im vorliegenden Fall gilt s = 2$\sigma$, wobei die Standardabweichung der Verteilung der Abweichungen der Spindelparameter-Messwerte $P(\tau)$ von einem gleitenden Mittelwert $\overline{P}$ beträgt. Der gleitende Mittelwert $\overline{P}$ wird erhalten durch Tiefpassfilterung der entsprechenden Parameter-Messwerte $P(\tau)$ mit einem Ein-Hertz-Tiefpassfilter. Der Einfachheit halber ist der Signalrauschparameter s weiter rechts eingezeichnet.

Aus der vorausgehenden Bearbeitung eines anderen Werkstücks mit dem gleichen Bearbeitungsprogramm ist zudem der Signalspannenparameter Q bekannt. Dieser ist die Intervallbreite der Spindelparameter-Messwerte P($\tau$), während das Werkzeug 26.1 (vergleiche Figur 1) in Eingriff mit dem Werkstück 12 steht.

Nach Erreichen einer vorgegebenen Programmzeile zu einem Startzeitpunkt $T_{Start}$ wird kontinuierlich ein Spindelparameter-Minimalwert $P_{S,min}$ berechnet. Bis zu dem Zeitpunkt, in dem die Spindelparameter-Messwerte P($\tau$) ihr Minimum erreichen, nämlich zum Zeitpunkt $P_{min}$, wird zu jedem Zeitpunkt der Berechnung ein kleinerer Spindelparameter-Minimalwert $P_{S,min}(\tau)$ berechnet. Aus diesem Spindelparameter $P_{S,min}(\tau)$ wird anhand der Formel

$$G(\tau) = P_{S,min}(\tau) + k * s + L * Q$$

ein Überwachungsgrenzwert G berechnet und mit einem gespeicherten Überwachungsgrenzwert $G_{sp}$ verglichen.

Ist der aktuelle Überwachungsgrenzwert G($\tau$) kleiner als der gespeicherte Überwachungsgrenzwert $G_{sp}$, so wird der aktuelle Überwachungsgrenzwert G($\tau$) anstelle des bisherigen Überwachungsgrenzwertes gespeichert. Zum Zeitpunkt $t_{min}$ wird daher der eingezeichnete Überwachungsgrenzwert $G_{sp}$ gespeichert, der als horizontale Linie eingezeichnet ist. Da die später berechneten Spindelparameter-Minimalwerte P($\tau$) bis zu einem Zeitpunkt $T_B$, zu dem das Werkzeug bricht, diesen Wert nicht unterschreiten, bleibt der gespeicherte Überwachungsgrenzwert $G_{sp}$ unverändert.

Zum Zeitpunkt $T_B$ breche das Werkzeug. Dadurch fallen die Spindelparameter-Messwerte P($\tau$) ab. Entsprechend fällt der Spindelparameter-Minimalwert $P_{S,min}(\tau)$. Zwar sinkt auch der aktuelle Überwachungsgrenzwert G($\tau$), sodass der gespeicherte Überwachungsgrenzwert $G_{sp}$ sinkt, die Spindelparameter-Messwerte P($\tau$) bleiben jedoch allesamt unterhalb dieses neuen gespeicherten Überwachungsgrenzwertes $G_{sp}$. Nach Ablauf einer vorgegebenen Intervallzeit $\Delta t$ wird daher zum Zeitpunkt Tw eine Warnmeldung ausgegeben. Ein Bediener kann dann das Bearbeitungsprogramm anhalten, das Werkzeug wechseln und die Bearbeitung neu starten.

In Figur 2 ist der Spindelparameter in willkürlich gewählten Einheiten angegeben. Das angegebene Überwachungsverfahren funktioniert unabhängig von der Wahl der Einheiten.

## Bezugszeichenliste

| | | | |
|---|---|---|---|
| 10 | Werkzeugmaschine | $\vec{r}(t)$ | Trajektorie |
| 12 | Werkstück | Ms | Spindel-Drehmoment |
| 14 | Spindel | $M_{Soll}$ | Soll-Drehfrequenz |
| 16 | erste Maschinenachse | s | Signalrauschparameter |
| 18 | zweite Maschinenachse | Q | Signalspannenparameter |
| 20 | dritte Maschinenachse | I | Intervall |
| 22 | Maschinensteuerung | B | Intervallbreite |
| 24 | Auswerteeinheit | $\Delta t$ | Intervallzeit |
| 26 | Werkzeug | $\sigma$ | Standardabweichung |
| 28 | Werkzeugwechsler | $\bar{P}$ | gleitender Mittelwert |
| 30 | Bildschirm | $T_a$ | Anlernzeit |
| 32 | Eingabevorrichtung | Tw | Zeitpunkt der Warnmeldung |
| | | $T_{Start}$ | Startzeitpunkt |
| | | Tmin | Zeitpunkt des Minimums der P($\tau$) |
| | | $T_B$ | Zeitpunkt des Werkzeugbruchs |
| | | G | Überwachungsgrenzwert |
| | | $G_{sp}$ | gespeicherter Überwachungsgrenzwert |
| | | fs | Abtastfrequenz |
| | | P | Spindelparameter |
| | | $P_{S,min}$ | Spindelparameter-Minimalwert |
| | | $P_{S,max}$ | Spindelparameter-Maximalwert |
| | | n | Spindel-Drehfrequenz |

**Patentansprüche**

1. Überwachungsverfahren zum Überwachen einer Werkzeugmaschine (10), insbesondere auf Werkzeugbruch, die

(i) eine Spindel (14),
(ii) zumindest eine erste Maschinenachse (16) und
(iii) eine Maschinensteuerung (22), die ausgebildet ist zum Ansteuern der Spindel (14) und der Maschinenachse (16) und zum Ausgeben von Maschinenparametern, aufweist,

mit den automatisch durchgeführten Schritten:

(a) während des Abarbeitens eines Bearbeitungsprogramms zum Bearbeiten eines Werkstücks (12), zeitabhängiges Erfassen eines Spindelparameters (P), der eine Leistung der Spindel (14) beschreibt,
(b) Erfassen eines Signalrauschparameters (s), der die Stärke einer stochastischen Schwankung von Spindelparameter-Messwerten ($P(\tau)$) beschreibt, und eines Signalspannenparameter (Q), der eine Breite des Intervalls (I) angibt, in dem die Spindelparameter-Messwerte bei der Bearbeitung des Werkstücks (12) liegen,
(c) nach Erreichen einer vorgegebenen Programmzeile des Bearbeitungsprogramms kontinuierliches Berechnen eines Spindelparameter-Minimalwerts ($P_{S,min}$) der Spindelparameter-Messwerte ($P(\tau)$), sodass ein aktueller Spindelparameter-Minimalwert ($P_{S,min}(\tau)$) erhalten wird,
(d) kontinuierliches Berechnen eines Überwachungsgrenzwerts ($G(\tau)$) aus dem Spindelparameter-Minimalwert ($P_{S,min}(\tau)$), dem Signalrauschparameter (s) und dem Signalspannenparameter (Q),
(e) Speichern des aktuellen Überwachungsgrenzwerts ($G(\tau)$), wenn der aktuelle Überwachungsgrenzwert ($G(\tau)$) kleiner ist als ein gespeicherter Überwachungsgrenzwert ($G_{sp}$), und
(f) Ausgeben einer Warnmeldung, wenn der Spindelparameter P über eine vorgegebene Intervallzeit ($\Delta t$) beständig unterhalb des gespeicherten Überwachungsgrenzwerts ($G_{sp}$) liegt.

2. Überwachungsverfahren nach Anspruch 1, der Überwachungsgrenzwert (G) zumindest der Summe aus

dem Spindelparameter-Minimalwert ($P_{S,min}(\tau)$) und
dem Minimum aus

- dem k-fachen des Signalrauschparameter (s), wobei $1 \leq k \leq 13$ gilt, und
- dem L-fachen des Signalspannenparameters (Q), wobei $0{,}05 \leq L \leq 0{,}8$ gilt, entspricht.

3. Überwachungsverfahren nach Anspruch 1, **dadurch gekennzeichnet, dass** der Überwachungsgrenzwert (G) zumindest der Summe aus

- dem Spindelparameter-Minimalwert ($P_{S,min}(\tau)$),
- dem k-fachen des Signalrauschparameter (s), wobei $1 \leq k \leq 13$ gilt und
- dem L-fachen eines Signalspannenparameters (Q), wobei $0{,}05 \leq L \leq 0{,}8$ gilt, entspricht.

4. Überwachungsverfahren nach einem der vorstehenden Ansprüche, **gekennzeichnet durch** die Schritte:

(a) zu Beginn des Überwachungsverfahrens zeitabhängiges Erfassen des Spindelparameters für eine vorgegebene Anlernzeit ($T_a$),
(b) vor Schritt (c) Speichern eines Spindelparameter-Minimalwerts, der in einem Intervall (I) um den Mittelwert des Spindelparameters liegt, wobei das Intervall (I) eine Intervallbreite (B) hat, die drei Viertel der Differenz zwischen einem Maximum und dem Minimum des Spindelparameters in der Anlernzeit ($T_a$) entspricht.

5. Überwachungsverfahren nach einem der vorstehenden Ansprüche, **dadurch gekennzeichnet, dass** die Intervallzeit ($\Delta t$)

- zwischen dem 0,3-fachen und dem 0,8-fachen einer Bearbeitungszeit, während der das Werkstück (12) mit ein und demselben Werkzeug (26) bearbeitet wird, beträgt und/oder
- zumindest 0,5 Sekunden und höchstens 10 Minuten beträgt.

6. Verfahren nach einem der vorstehenden Ansprüche, **dadurch gekennzeichnet, dass** der Signalrauschparameter zwischen 1 Promille und 50 Promille des Spindelparameter-Maximalwerts gewählt wird.

**7.** Verfahren nach einem der vorstehenden Ansprüche 1 bis 5, **dadurch gekennzeichnet, dass** der Signalrauschparameter (s)

- zumindest das Doppelte der Standardabweichung ($\sigma$) einer Verteilung der Abweichungen der Spindelparameter-Messwerte von einem gleitenden Mittelwert ($\overline{P}$) beträgt und/oder
- höchstens das Fünffache, insbesondere das Vierfache, der Standardabweichung ($\sigma$) einer Verteilung der Abweichungen der Spindelparameter-Messwerte vom gleitenden Mittelwert ($\overline{P}$) beträgt,
- wobei der gleitende Mittelwert ($\overline{P}$) berechnet wird durch Filtern der Spindelparameter-Messwerte $P(\tau)$ mit einem 1-Hz-Tiefpass.

**8.** Überwachungsvorrichtung zum Überwachen einer Werkzeugmaschine (10), mit

(i) einer Auswerteeinheit (24) und
(ii) einer Verbindungsvorrichtung zum Verbinden der Auswerteeinheit (24) mit einer Maschinensteuerung (22) der Werkzeugmaschine (10),
**dadurch gekennzeichnet, dass**
(iii) die Auswerteeinheit (24) eingerichtet ist zum automatischen Durchführen eines Verfahrens mit den Schritten:

(a) während des Abarbeitens eines Bearbeitungsprogramms zum Bearbeiten eines Werkstücks (12), zeitabhängiges Erfassen eines Spindelparameters (P), der eine Leistung der Spindel (14) beschreibt,
(b) Erfassen

- eines Signalrauschparameters (s), der die Stärke einer stochastischen Schwankung von Spindelparameter-Messwerten ($P(\tau)$) beschreibt, und eines Signalspannenparameters (Q), der eine Breite des Intervalls (I) angibt, in dem die Spindelparameter-Messwerte bei der Bearbeitung des Werkstücks (12) liegen,

(c) nach Erreichen einer vorgegebenen Programmzeile des Bearbeitungsprogramms kontinuierlich Berechnen eines Spindelparameter-Minimalwerts ($P_{S,min}$) der Spindelparameter-Messwerte, sodass ein aktueller Spindelparameter-Minimalwert ($P_{S,min}(\tau)$) erhalten wird,
(d) kontinuierlich Berechnen eines Überwachungsgrenzwerts ($G(\tau)$) aus dem Spindelparameter-Minimalwert ($P_{S,min}(\tau)$), dem Signalrauschparameter (s) und dem Signalspannenparameter (Q),
(e) Speichern des aktuellen Überwachungsgrenzwerts ($G(\tau)$), wenn der aktuelle Überwachungsgrenzwert ($G(\tau)$) kleiner ist als der gespeicherte Überwachungsgrenzwert ($G_{sp}$), und
(f) Ausgeben einer Warnmeldung, wenn der Spindelparameter (P) über eine vorgegebene Intervallzeit ($\Delta t$) beständig unterhalb des gespeicherten Überwachungsgrenzwerts ($G_{sp}$) liegt.

**9.** Werkzeugmaschine (10) mit

(i) einer Spindel (14),
(ii) zumindest einer ersten Maschinenachse (16) und
(iii) einer Maschinensteuerung (22), die ausgebildet ist zum Ausgeben von Maschinenparametern, **gekennzeichnet durch**
(iv) eine Überwachungsvorrichtung gemäß Anspruch 8, die eingerichtet ist zum automatischen Durchführen eines Verfahrens nach einem der Ansprüche 1 bis 7, wobei der Spindelparameter (P) als Leistung der Spindel (14) ein Spindeldrehmoment der Spindel (14) beschreibt.

**Claims**

**1.** A monitoring method for monitoring a machine tool (10), in particular for tool breakage, wherein the machine tool (10) comprises

(i) a spindle (14),
(ii) at least one first machine shaft (16) and
(iii) a machine control system (22), which is designed to control the spindle (14) and the machine shaft (16) and to issue machine parameters,

with the automatically executed steps:

(a) during the execution of a machining programme for machining a workpiece (12), time-dependent detection of a spindle parameter (P), which describes a performance of the spindle,

(b) detection of a signal noise parameter (s), which describes the magnitude of a stochastic fluctuation of spindle parameter measured values ($P(\tau)$), and a signal span parameter (Q), which indicates the width of an interval (I) in which the spindle parameter measured values lie during the machining of the workpiece (12),

(c) upon reaching a predetermined programme line of the machining programme, continuous calculation of a spindle parameter minimum value ($P_{S,min}$) of the spindle parameter measured values ($P(\tau)$), thereby giving a current spindle parameter minimum value ($P_{S,min}(\tau)$),

(d) continuous calculation of a monitoring limit value ($G(\tau)$) from the spindle parameter minimum value ($P_{S,min}(\tau)$), the signal noise parameter (s) and the signal span parameter (Q),

(e) storage of the current monitoring limit value ($G(\tau)$) if the current monitoring limit value ($G(\tau)$) is smaller than a stored monitoring limit value ($G_{sp}$), and

(f) issue of a warning message if the spindle parameter P is consistently below the stored monitoring limit value ($G_{sp}$) over a predetermined interval time ($\Delta t$).

2. The monitoring method according to claim 1, the monitoring limit value (G) corresponding at least to the sum of

the spindle parameter minimum value ($P_{S,min}(\tau)$) and
the minimum of

- k-times the signal noise parameter (s), wherein $1 \leq k \leq 13$ applies, and
- L-times the signal span parameter (Q), wherein $0.05 \leq k \leq 0.8$ applies.

3. The monitoring method according to claim 1, **characterised in that** the monitoring limit value (G) corresponds at least to the sum of

- the spindle parameter minimum value ($P_{S,min}(\tau)$),
- k-times the signal noise parameter (s), wherein $1 \leq k \leq 13$ applies, and
- L-times a signal span parameter (Q), wherein $0.05 \leq k \leq 0.8$ applies.

4. The monitoring method according to one of the above claims, **characterised by** the steps:

(a) at the beginning of the monitoring method, time-dependent detection of the spindle parameter for a predetermined learning time ($T_a$),

(b) prior to step (c), storage of a spindle parameter minimum value which lies in an interval (I) around the mean value of the spindle parameter, wherein the interval (I) has an interval width (B), which corresponds to three quarters of the difference between a maximum and the minimum of the spindle parameter in the learning time ($T_a$).

5. The monitoring method according to one of the above claims, **characterised in that** the interval time ($\Delta t$)

- is between 0.3 times and 0.8 times a machining time during which the workpiece (12) is machined with one and the same tool (26) and/or
- is at least 0.5 seconds and at most 10 minutes long.

6. The method according to one of the above claims, **characterised in that** the signal noise parameter is selected between 1 per thousand and 50 per thousand of the spindle parameter maximum value.

7. The method according to one of the claims 1 to 5, **characterised in that** the signal noise parameter (s) is

- at least double the standard deviation ($\sigma$) of a distribution of the deviations of the spindle parameter measurement values from a moving average ($\overline{P}$) and/or
- at most five times, especially four times, the standard deviation ($\sigma$) of a distribution of the deviations of the spindle parameter measured values from the moving average ($\overline{P}$),
- wherein the moving average ($\overline{P}$) is calculated by filtering the spindle parameter measured values $P(\tau)$ with a 1-Hz low-pass filter.

8. A monitoring device for monitoring a machine tool (10) with

   (i) an evaluation unit (24) and
   (ii) a connection device for connecting the evaluation unit (24) to a machine control system (22) of the machine tool (10),
   **characterised in that**
   (iii) the evaluation unit (24) is configured to automatically carry out a method featuring the steps:

   (a) during the execution of a machining programme for machining a workpiece (12), time-dependent detection of a spindle parameter (P), which describes a performance of the spindle,
   (b) detection of a signal noise parameter (s), which describes the magnitude of a stochastic fluctuation of spindle parameter measured values ($P(\tau)$), and a signal span parameter (Q), which indicates the width of an interval (I) in which the spindle parameter measured values lie during the machining of the workpiece (12),
   (c) upon reaching a predetermined programme line of the machining programme, continuous calculation of a spindle parameter minimum value ($P_{S,min}$) of the spindle parameter measured values, thereby giving a current spindle parameter minimum value ($P_{S,min}(\tau)$),
   (d) continuous calculation of a monitoring limit value ($G(\tau)$) from the spindle parameter minimum value ($P_{S,min}(\tau)$), the signal noise parameter (s) and the signal span parameter (Q),
   (e) storage of the current monitoring limit value ($G(\tau)$) if the current monitoring limit value ($G(\tau)$) is smaller than a stored monitoring limit value ($G_{sp}$), and
   (f) issue of a warning message if the spindle parameter P is consistently below the stored monitoring limit value ($G_{sp}$) over a predetermined interval time ($\Delta t$).

9. A machine tool (10) with

   (i) a spindle (14),
   (ii) at least one first machine shaft (16) and
   (iii) a machine control system (22) that is designed to issue machine parameters,
   **characterised by**
   (iv) a monitoring unit according to claim 8 that is configured to automatically conduct a method according to one of the claims 1 to 7, wherein the spindle parameter (P) describes a spindle torque of the spindle (14) as the power of the spindle (14).

**Revendications**

1. Procédé de surveillance pour surveiller une machine-outil (10), en particulier vis-à-vis d'une rupture d'outil, qui comprend

   (i) une broche (14),
   (ii) au moins un premier axe de machine (16) et
   (iii) une commande de machine (22) qui est réalisée pour piloter la broche (14) et l'axe de machine (16) et pour émettre des paramètres de machine,

   comprenant les étapes exécutées automatiquement et consistant à :

   (a) pendant l'exécution d'un programme d'usinage pour usiner une pièce (12), détecter en fonction du temps un paramètre de broche (P) qui décrit une puissance de la broche (14),
   (b) détecter un paramètre de bruit de signal (s) qui décrit l'intensité d'une variation stochastique de valeurs mesurées de paramètre de broche ($P(\tau)$), et détecter un paramètre de marge de signal (Q) qui indique une largeur de l'intervalle (I) dans lequel se situent les valeurs mesurées de paramètre de broche lors de l'usinage de la pièce (12),
   (c) après avoir atteint une ligne de programme prédéterminée du programme d'usinage, calculer en continu une valeur minimale de paramètre de broche ($P_{s,min}$) des valeurs mesurées de paramètre de broche ($P(\tau)$), de manière à obtenir une valeur minimale de paramètre de broche actuelle ($P_{s,min(\tau)}$),
   (d) calculer en continu une valeur limite de surveillance ($G(\tau)$) à partir de la valeur minimale de paramètre de broche ($P_{s,min(\tau)}$), du paramètre de bruit de signal (s) et du paramètre de marge de signal (Q),

(e) mémoriser la valeur limite de surveillance actuelle (G($\tau$)) lorsque la valeur limite de surveillance actuelle (G($\tau$)) est inférieure à une valeur limite de surveillance mémorisée ($G_{sp}$), et

(f) émettre un message d'avertissement lorsque le paramètre de broche P est constamment inférieur à la valeur limite de surveillance mémorisée ($G_{sp}$) pendant un temps d'intervalle prédéterminé ($\Delta t$).

**2.** Procédé de surveillance selon la revendication 1, dans lequel la valeur limite de surveillance (G) correspond au moins à la somme de la valeur minimale de paramètre de broche ($P_{s,min(\tau)}$) et du minimum de

- k fois le paramètre de bruit de signal (s), où $1 \leq k \leq 13$, et
- L fois le paramètre de marge de signal (Q), où $0,05 \leq L \leq 0,8$,

**3.** Procédé de surveillance selon la revendication 1, **caractérisé en ce que** la valeur limite de surveillance (G) correspond au moins à la somme de

- la valeur minimale de paramètre de broche ($P_{s,min(\tau)}$),
- k fois le paramètre de bruit de signal (s), où $1 \leq k \leq 13$ et
- L fois un paramètre de marge de signal (Q), où $0,05 \leq L \leq 0,8$.

**4.** Procédé de surveillance selon l'une des revendications précédentes, **caractérisé par** les étapes consistant à :

(a) au début du procédé de surveillance, détecter en fonction du temps le paramètre de broche pendant un temps d'apprentissage ($T_a$) prédéterminé,
(b) avant l'étape (c), stocker une valeur minimale de paramètre de broche qui

est dans un intervalle (I) autour de la valeur moyenne du paramètre de broche, l'intervalle (I) ayant une largeur d'intervalle (B) qui correspond aux trois quarts de la différence entre un maximum et le minimum du paramètre de broche pendant le temps d'apprentissage ($T_a$).

**5.** Procédé de surveillance selon l'une des revendications précédentes, **caractérisé en ce que** le temps d'intervalle ($\Delta t$)

- est compris entre 0,3 fois et 0,8 fois un temps d'usinage pendant lequel la pièce (12) est usinée avec un seul et même outil (26), et/ou
- est de 0,5 seconde au minimum et de 10 minutes au maximum.

**6.** Procédé selon l'une des revendications précédentes, **caractérisé en ce que** le paramètre de bruit de signal est choisi entre 1 pour mille et 50 pour mille de la valeur maximale du paramètre de broche.

**7.** Procédé selon l'une des revendications précédentes 1 à 5, **caractérisé en ce que** le paramètre de bruit de signal (s)

- est au moins égal au double de l'écart-type ($\sigma$) d'une distribution des écarts des valeurs mesurées du paramètre de broche par rapport à une valeur moyenne glissante ($\overline{P}$) et/ou
- est au plus cinq fois, en particulier quatre fois, l'écart-type ($\sigma$) d'une distribution des écarts des valeurs mesurées de paramètre de broche par rapport à la valeur moyenne glissante ($\overline{P}$),
- la valeur moyenne glissante ($\overline{P}$) étant calculée en filtrant les valeurs mesurées de paramètre de broche P($\tau$) avec un filtre passe-bas de 1 Hz.

**8.** Dispositif de surveillance pour surveiller une machine-outil (10), comportant

(i) une unité d'évaluation (24) et
(ii) un dispositif de liaison pour relier l'unité d'évaluation (24) à une commande de machine (22) de la machine-outil (10),
**caractérisé en ce que**
(iii) l'unité d'évaluation (24) est conçue pour mettre en œuvre automatiquement un procédé comprenant les étapes consistant à :

(a) pendant l'exécution d'un programme d'usinage pour usiner une pièce (12),
détecter en fonction du temps un paramètre de broche (P) qui décrit une puissance de la broche (14),
(b) détecter un paramètre de bruit de signal (s) qui décrit l'intensité d'une variation stochastique des valeurs mesurées de paramètre de broche (P($\tau$)), et détecter un paramètre de marge de signal (Q) qui indique une largeur de l'intervalle (I) dans lequel se situent les valeurs mesurées de paramètre de broche lors de l'usinage de la pièce (12),

(c) après avoir atteint une ligne de programme prédéterminée du programme d'usinage, calculer en continu une valeur minimale de paramètre de broche ($P_{s,min}$) des valeurs mesurées de paramètre de broche, de manière à obtenir une valeur minimale de paramètre de broche actuelle ($P_{s,min(\tau)}$),

(d) calculer en continu une valeur limite de surveillance ($G(\tau)$) à partir de la valeur minimale de paramètre de broche ($P_{s,min(\tau)}$), du paramètre de bruit de signal (s) et du paramètre de marge de signal (Q),

(e) mémoriser la valeur limite de surveillance actuelle ($G(\tau)$) lorsque la valeur limite de surveillance actuelle ($G(\tau)$) est inférieure à la valeur limite de surveillance mémorisée ($G_{sp}$), et

(f) émettre un message d'avertissement lorsque le paramètre de broche (P) est constamment inférieur à la valeur limite de surveillance mémorisée ($G_{sp}$) pendant un temps d'intervalle prédéterminé ($\Delta t$).

9. Machine-outil (10) comprenant

    (i) une broche (14),
    (ii) au moins un premier axe de machine (16) et
    (iii) une commande de machine (22) qui est réalisée pour émettre des paramètres de machine,
    **caractérisée par**
    (iv) un dispositif de surveillance selon la revendication 8, qui est conçu pour mettre en oeuvre automatiquement un procédé selon l'une des revendications 1 à 7, le paramètre de broche (P) décrivant, en tant que puissance de la broche (14), un couple de rotation de la broche (14).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1407853 A1
- EP 1679566 A1
- WO 2007090536 A1
- DE 4117637 A1